# EUROPEAN PATENT APPLICATION

(11) **EP 4 741 801 A1**
(43) Date of publication of application: **13.05.2026**
(21) Application number: 25214834.1
(22) Date of filing: 11.11.2025
(51) Int. Cl.: G01N 15/14, G01N 35/00, G01N 35/10

(54) **AUTOMATED FLOW CYTOMETRY PREPARATION AND ACQUISITION SYSTEM, AND METHODS OF USE THEREOF**

(30) Priority: 12.11.2024 US 202463719515 P
(71) Applicant: Becton, Dickinson and Company, Franklin Lakes, NJ 07417-1880 (US)
(72) Inventor: Valeryevich Bashratyan, Roman, San Diego, California 92111 (US); Ann Chuddy, Jennifer, Galway, New York 12074 (US); de Vera, Kiera, San Diego, California 92128 (US); Gayle Birmingham, Katherine, Philadelphia, Pensylvania 19130 (US)
(74) Representative: Bals & Vogel Patentanwälte PartGmbB

(57) **Abstract**

Robotic systems for automated sample preparation are provided. Systems of interest include a plurality of sample processing modules, a plurality of robotic components integrated with the sample processing modules, a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis, and an operable connection among the processor, the sample processing modules and the plurality of robotic components. Systems according to certain embodiments further include a flow cytometer, wherein the plurality of robotic components are further integrated with the flow cytometer, wherein the memory further comprises instructions stored thereon, which when executed by the processor, cause the processor to control the sample processing modules, the robotic components and the flow cytometer to: load each prepared sample of the plurality of samples into the flow cytometer, and operate the flow cytometer to analyze each prepared sample of the plurality of samples, wherein the operable connection operably connects the processor, the sample processing modules, the flow cytometer and the plurality of robotic components. Methods of use and configuration or design of systems are also provided.

## Description

### CROSS-REFERENCE TO RELATED APPLICATION

Pursuant to 35 U.S.C. § 119(e), this application claims priority to the filing date of United States Provisional Patent Application Serial No. 63/719,515 filed November 12, 2024, the disclosure of which application is incorporated herein by reference in its entirety.

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

Typically, before a sample can be characterized or otherwise analyzed by a flow cytometer, the sample, such as a biological sample, requires preparation, including, for example, sample staining and/or sample washing. Such preparation steps can be time and labor intensive, i.e., such that an operator or technician is required to conduct or oversee such aspects of sample preparation. Further, such preparation steps, when conducted or overseen by a human technician, can introduce variation into the resulting flow cytometric analysis of such prepared samples.

### SUMMARY

Thus, the inventors have realized that there is a need for a robotic system that enables fully automated sample preparation and fully automated flow cytometric analysis. In particular, there is a need for a modular robotic system that permits automated sample preparation of flow cytometry assays to provide a walk-away solution for sample staining, washing and acquisition with the ability to stagger multiple unique experiments simultaneously. Embodiments of the present disclosure address this need. Embodiments of the present disclosure address limitations of existing techniques by providing a fully walk-away solution, i.e., a system configured such that flow cytometric samples can be prepared and analyzed without direct user supervision or manipulation. Such improvements of existing techniques may, among other things, improve sample preparation consistency and accuracy as well as improve efficiency and cost-effectiveness of sample preparation and flow cytometric analysis of prepared samples.

Aspects of the present disclosure include robotic systems for automated sample preparation. Systems according to certain embodiments include a plurality of sample processing modules, a plurality of robotic components integrated with the sample processing modules, a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis, and an operable connection among the processor, the sample processing modules and the plurality of robotic components. Systems according to certain embodiments further include a flow cytometer, wherein the plurality of robotic components are further integrated with the flow cytometer, wherein the memory further comprises instructions stored thereon, which when executed by the processor, cause the processor to control the sample processing modules, the robotic components and the flow cytometer to: load each prepared sample of the plurality of samples into the flow cytometer, and operate the flow cytometer to analyze each prepared sample of the plurality of samples, wherein the operable connection operably connects the processor, the sample processing modules, the flow cytometer and the plurality of robotic components.

Methods of preparing samples for flow cytometric analysis using systems according to the present disclosure are also provided. Methods according to certain embodiments include introducing a plurality of samples into a first sample processing module of a plurality of sample processing modules of a system, wherein the system comprises: the plurality of sample processing modules, a plurality of robotic components integrated with the sample processing modules, a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis, and an operable connection among the processor, the sample processing modules and the plurality of robotic components, providing sample preparation instructions to the system, activating the system to automatically prepare samples according to the sample preparation instructions. In some cases, the system further comprises a flow cytometer, and the sample preparation instructions further comprise instructions for: using a robotic component to load a prepare sample into the flow cytometer, using the flow cytometer to flow cytometrically analyze the sample, and using a robotic component to remove the sample from the flow cytometer.

Computer-implemented methods of preparing samples for flow cytometric analysis using systems according to the present disclosure are also provided. Computer implemented methods according to certain embodiments include receiving a plurality of samples into a first sample processing module of a plurality of sample processing modules of a system, wherein the system comprises: the plurality of sample processing modules, a plurality of robotic components integrated with the sample processing modules, a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis, and an operable connection among the processor, the sample processing modules and the plurality of robotic components, and controlling the robotic components to manipulate the plurality of samples using the sample processing modules to prepare the plurality of samples according to the instructions stored on the memory. In some cases, the system further comprises a flow cytometer, and the sample preparation instructions further comprise instructions for: using a robotic component to load a prepare sample into the flow cytometer, using the flow cytometer to flow cytometrically analyze the sample, and using a robotic component to remove the sample from the flow cytometer.

### BRIEF DESCRIPTION OF THE FIGURES

The disclosure may be best understood from the following detailed description when read in conjunction with the accompanying drawings. Included in the drawings are the following figures:

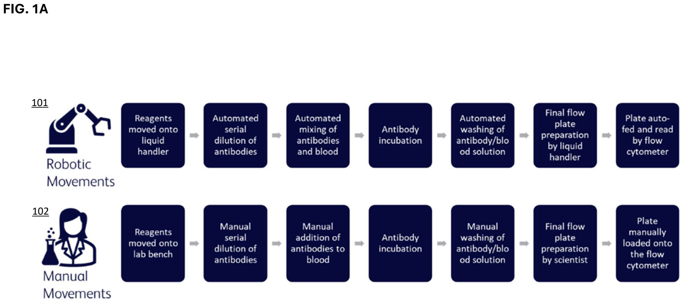

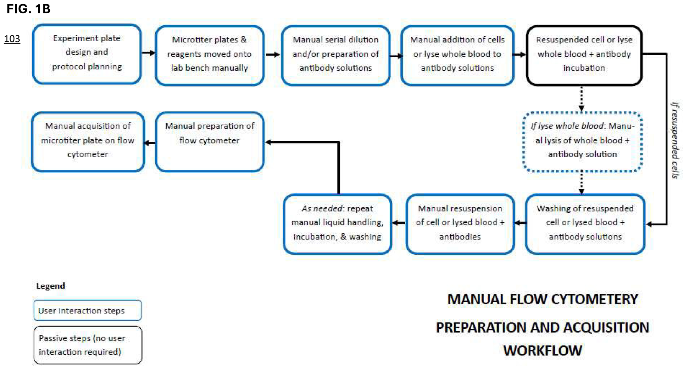

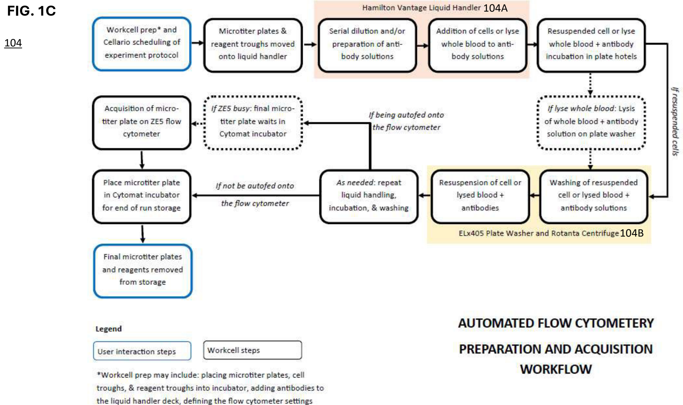

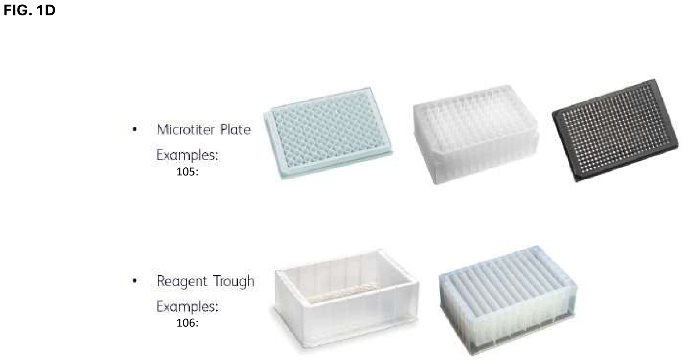

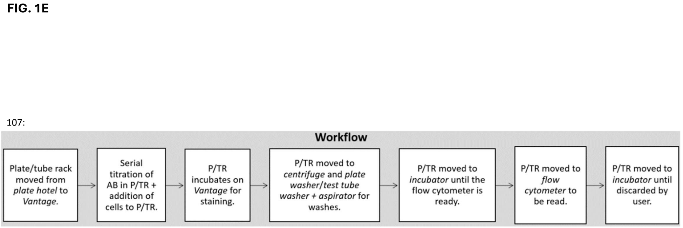

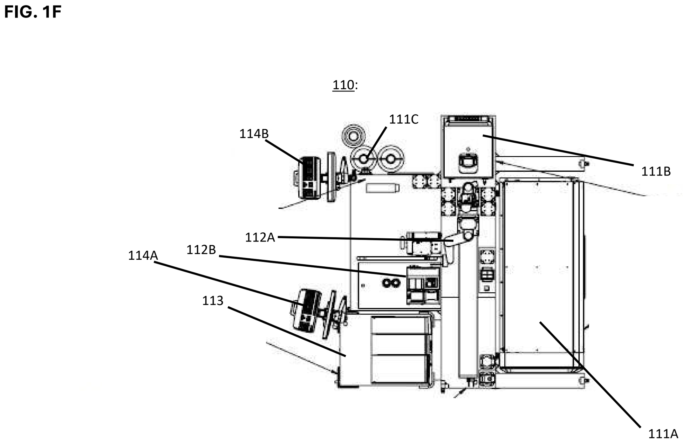

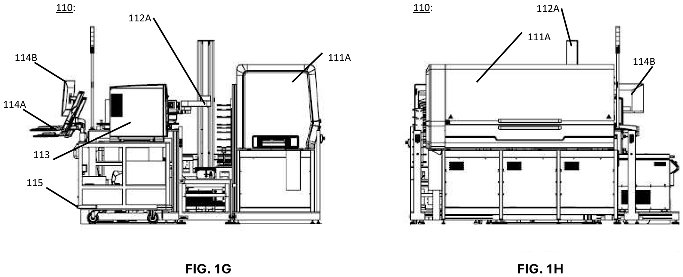

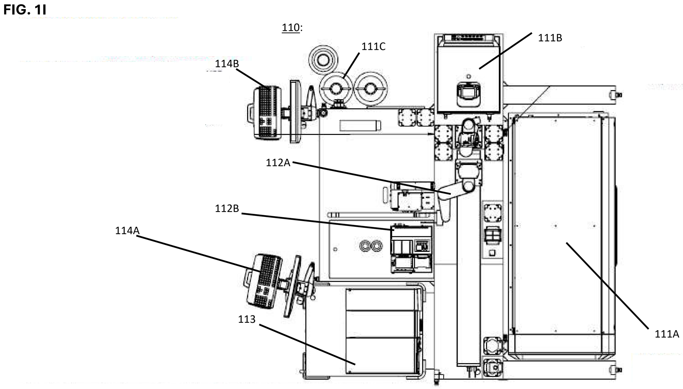

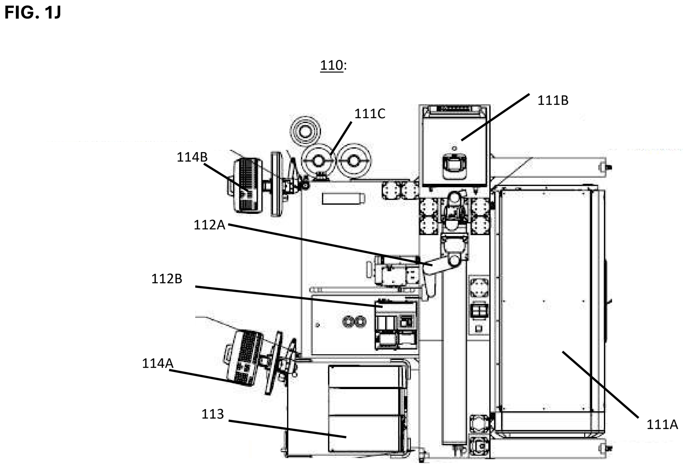

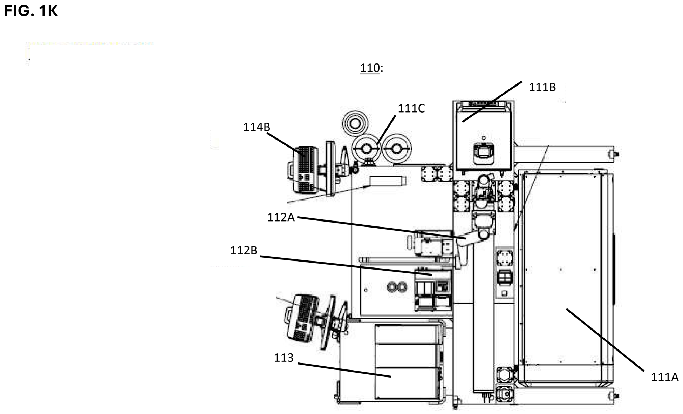

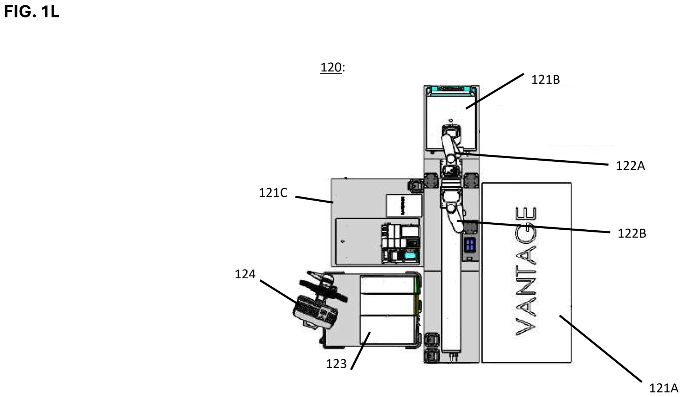

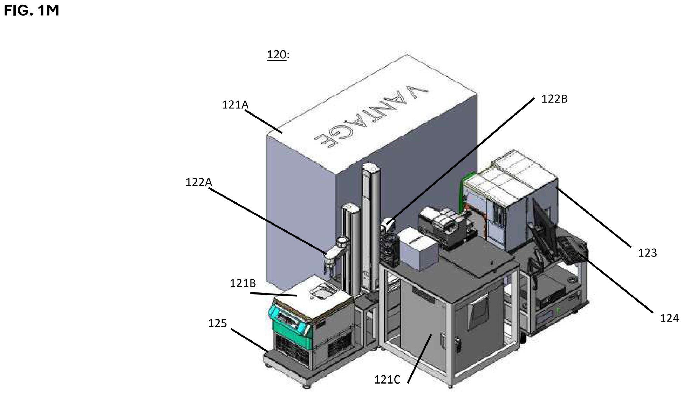

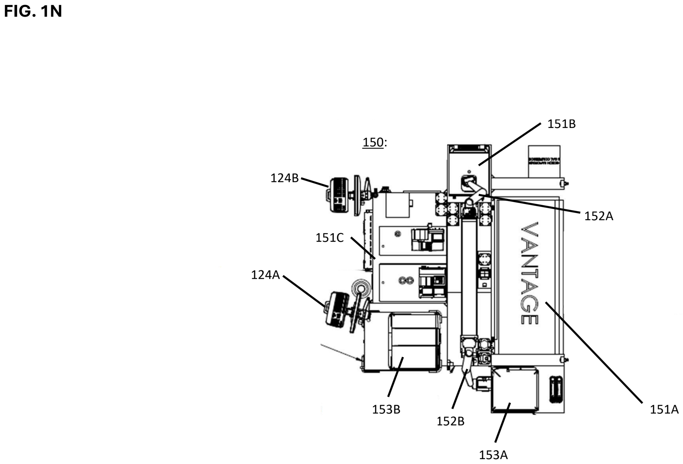

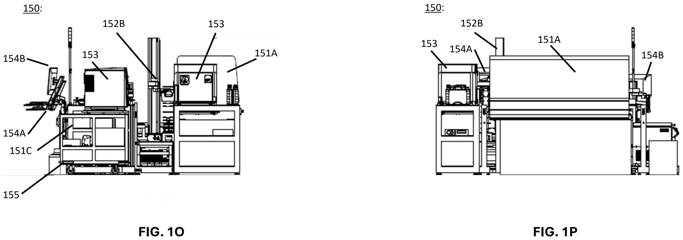

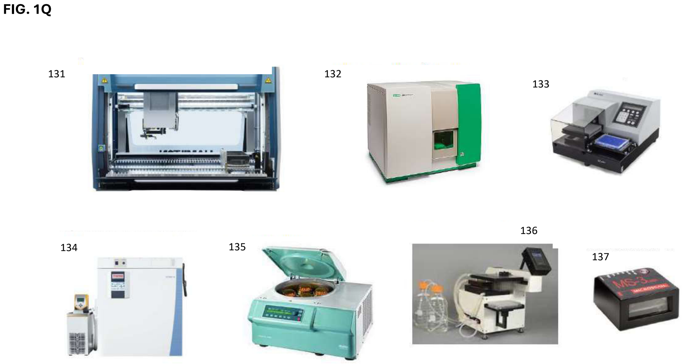

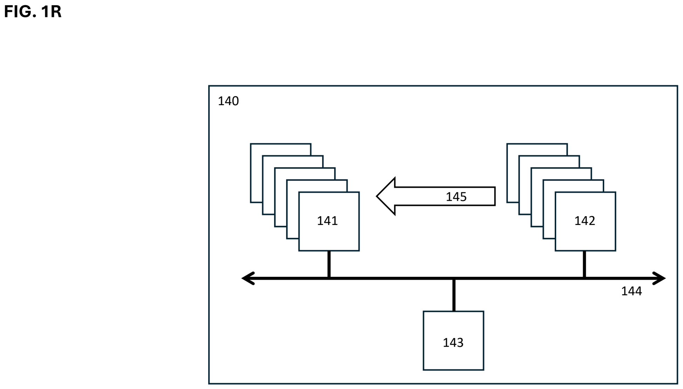

**FIG. 1A** depicts steps of an exemplary workflow for sample preparation and flow cytometric analysis performed automatically by an embodiment of a system as compared with similar steps performed manually by a laboratory technician. **FIGS. 1B-****1C** present additional examples of manual and automated workflows. **FIG.** 1D shows exemplary microtiter plates and exemplary reagent troughs, in each case for use by a system according to an embodiment. **FIG.** 1E presents another example of an automated workflow for sample preparation and flow cytometric analysis of the prepared sample. **FIGS. 1F-1K** show an exemplary system for automated sample preparation according to an embodiment. **FIGS. 1L-1M** show an exemplary system for automated sample preparation according to another embodiment. **FIGS. 1N-1P** show an exemplary system for automated sample preparation according to still another embodiment. **FIG. 1Q** shows exemplary sample processing modules that may be integrated into systems of the present disclosure. **FIG. 1R** shows a schematic diagram of an exemplary system according to an embodiment.
**FIG. 2** presents a flow cytometric system according to certain embodiments.
**FIG. 3** depicts an image-enabled particle sorter according to certain embodiments.
**FIG. 4** depicts a functional block diagram of a particle analysis system according to certain embodiments.
**FIG. 5** depicts a depicts a functional block diagram for one example of a control system according to certain embodiments.
**FIG. 6A-6B** depict schematic drawings of a particle sorter system according to certain embodiments.
**FIGS. 7A-7C** depict flow diagrams showing methods of automatic sample preparation for flow cytometric analysis according to different embodiments.
**FIG. 8** depicts aspects of a computer-controlled system according to certain embodiments.

### DETAILED DESCRIPTION

Aspects of the present disclosure include robotic systems for automated sample preparation. Systems according to certain embodiments include a plurality of sample processing modules, a plurality of robotic components integrated with the sample processing modules, a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis, and an operable connection among the processor, the sample processing modules and the plurality of robotic components. Systems according to certain embodiments further include a flow cytometer, wherein the plurality of robotic components are further integrated with the flow cytometer, wherein the memory further comprises instructions stored thereon, which when executed by the processor, cause the processor to control the sample processing modules, the robotic components and the flow cytometer to: load each prepared sample of the plurality of samples into the flow cytometer, and operate the flow cytometer to analyze each prepared sample of the plurality of samples, wherein the operable connection operably connects the processor, the sample processing modules, the flow cytometer and the plurality of robotic components.

Methods of preparing samples for flow cytometric analysis using systems according to the present disclosure are also provided. Methods according to certain embodiments include introducing a plurality of samples into a first sample processing module of a plurality of sample processing modules of a system, wherein the system comprises: the plurality of sample processing modules, a plurality of robotic components integrated with the sample processing modules, a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis, and an operable connection among the processor, the sample processing modules and the plurality of robotic components, providing sample preparation instructions to the system, activating the system to automatically prepare samples according to the sample preparation instructions. In some cases, the system further comprises a flow cytometer, and the sample preparation instructions further comprise instructions for: using a robotic component to load a prepare sample into the flow cytometer, using the flow cytometer to flow cytometrically analyze the sample, and using a robotic component to remove the sample from the flow cytometer.

Computer-implemented methods of preparing samples for flow cytometric analysis using systems according to the present disclosure are also provided. Computer implemented methods according to certain embodiments include receiving a plurality of samples into a first sample processing module of a plurality of sample processing modules of a system, wherein the system comprises: the plurality of sample processing modules, a plurality of robotic components integrated with the sample processing modules, a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis, and an operable connection among the processor, the sample processing modules and the plurality of robotic components, and controlling the robotic components to manipulate the plurality of samples using the sample processing modules to prepare the plurality of samples according to the instructions stored on the memory. In some cases, the system further comprises a flow cytometer, and the sample preparation instructions further comprise instructions for: using a robotic component to load a prepare sample into the flow cytometer, using the flow cytometer to flow cytometrically analyze the sample, and using a robotic component to remove the sample from the flow cytometer.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope or spirit of the present disclosure. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### SYSTEMS

### Overview:

Aspects of the disclosure include robotic system for automated sample preparation. By "automated sample preparation," it is meant that systems of the invention are configured to automatically prepare a sample, i.e., prepare a sample for flow cytometric analysis. By "automatically," it is meant, for example, that the system is configured to perform sample preparation in a walk-away format, meaning that a user, e.g., an operator of the system, need not interact with, manipulate, or otherwise control, the sample or the system as the system is automatically performing a sample, i.e., such that the user or system operator can walk away from the system, i.e., not attend the system, as the system reliably and safely prepares samples for flow cytometric analysis. In some cases, the system is configured to automatically prepare a plurality of samples for flow cytometric analysis. In some cases, the system is configured to automatically and continuously prepare a plurality of samples for flow cytometric analysis. By continuously prepare a plurality of samples, it is meant that embodiments of systems may be configured to stagger the preparation of multiple unique sample preparation workflows. In some cases, continuously preparing a plurality of samples means that more than one sample is being prepared by the system at a time, i.e., such that certain sample preparation modules are utilized to prepare a first sample while certain other sample preparation modules are utilized to prepare a second sample simultaneously.

By sample preparation, it is meant performing any desired manipulation of a sample such that the sample, or aspects thereof, can be analyzed flow cytometrically. In some cases, sample preparation comprises sample staining and/or washing. Other examples of sample preparation steps are provided herein. In embodiments, sample preparation comprises utilizing any of the plurality of sample processing modules included in embodiments of systems of the invention. In embodiments, sample processing modules include, for example, one or more liquid handlers, centrifuges or incubators. Other examples of such sample processing modules are provided herein.

By "robotic" system, it is meant that the system comprises a plurality of robotic components, i.e., components capable of independently grasping and moving objects, such as, for example, sample plate. In embodiments, robotic components include, for example, robotic arms or robotic clamps or grippers. Other examples of robotic components are provided herein. By a "modular" system, it is meant that it is contemplated that embodiments of systems may be configured to comprise different combinations of sample preparation modules and/or different combinations of robotic components. As described herein, standard laboratory equipment is used in systems, and, as such, a modular system maybe configured to different laboratory equipment or different numbers of instances of laboratory equipment. In some cases, sample processing modules and/or robotic components may be modified or changed, e.g., swapped out, after a system is deployed, e.g., installed in a laboratory environment.

Embodiments of systems of the present disclosure integrate robotics with common stand-alone lab equipment to enable automated sample preparation and sample acquisition for flow cytometry assays. In embodiments, the robotic arms interact with the integrated lab equipment components to mimic human movements in the lab space replicating processes for antibody dilution, cell staining with fluorescent conjugated antibodies, washing of the samples, and resuspension of the samples for subsequent movement onto a flow cytometer where automated data acquisition is enabled. Although flexible, with the possibility to prepare samples in test tubes, and/or deep well plate formats, the primary output of embodiments of systems is fully stained flow cytometry samples formatted as desired, for example, in a 96-well standard depth plate format. In some cases, multiple 96-well plates can be prepared for a given flow cytometry experiment allowing users, i.e., system operators, e.g., scientists, to rapidly increase weekly testing throughput. Such an integrated system invention increases experimental power, drives workflow standardization and improves reproducibility by automating manual, error prone steps that may introduces user-to-user variability (i.e., when embodiments of systems of the present disclosure are not employed). Through implementation of specially selected robotics programmed to mimic human interactions in a lab setting, an important advantage provided by embodiments of systems of the present disclosure is the ability to enable walk-away flow cytometry sample preparation and acquisition without human monitoring ultimately expanding and maximizing working hours in any given time period, such as, e.g., a working week.

In some cases, embodiments of systems of the invention are configured and operate as follows: (1) A static robotic arm and a second robotic arm on a moving track are positioned so as to reach all critical lab equipment components of this embodiment of the integrated system. The static robotic arm is outfitted with specialized grippers to enable vertical sample plate transfers into and out of a centrifuge unit. (2) Each piece of equipment is connected to the larger system to receive and submit commands through a single scheduling software. (3) The scheduling software is programmed to combine processing on the integrated lab equipment (comprising, e.g., liquid handler, barcode scanner, centrifuge, washing station, incubator, sample hotels/stackers and/or flow cytometer) conducted by the two robotic arms in appropriate combinations to mimic human processes for flow cytometry assays. Given the modular nature of embodiments of systems of the present disclosure, any or all equipment components of the system can be selected and combined for an assay run. (4) Through the scheduling software, the liquid handler is commanded to perform any selected series of previously programmed but configurable scripts for reagent and specimen handling and pipetting. (5) Flexibility to schedule flow cytometry assay runs in advance and/or conduct more than one assay run simultaneously. (6) Pre-configured communication and alert messages are sent to the user, e.g., system operator or research operator, to notify of status updates and assay run completions.

### System advantages:

Embodiments of systems offer various advantages over existing solutions. Such advantages include, but are not limited to, the following. (1) Flexibility with sample preparation and handling in multiple labware formats (test tubes and plates) but with a distinct focus on 96-well sample plate formatting for increased sample throughput and increased experimental power. (2) Capability to prepare and process multiple 96-well sample plates in a single assay run as well as across multiple staggered scheduled assay runs. Other art focuses on test tube handling only or limited plate throughput. (3) Embodiments of systems enable end-to end walk-away automation throughout the entirety of the sample preparation process as well as the sample acquisition process. This is an advantage over existing systems of which no platform has the comprehensive capability to fully automate both the sample preparation process and the sample acquisition process with the extent of sample plate throughput and with the degree of sample cocktailing and specimen combinations that embodiments of systems of the present disclosure allow. (4) Embodiments of systems of the invention are capable of running unattended after standard shift hours and into the evening not only with the capability of acquiring sample plates on the flow cytometer instrument but also initiating sample preparation reagent and specimen handling methods on the liquid handler.

Existing techniques in the sample preparation space include: (1) BD FACSLyric integrated with BD FACSDuet Premium Sample Preparation System. Information regarding this existing technique can be found at the website produced by placing "https://www." before "bdbiosciences.com/en-us/products/instruments/sample-prep-systems/facslyric-with-facsduet," which website is incorporated herein in its entirety. This technique comprises a comprehensive sample preparation system that supports on board cocktailing (up to 45 reagents), washing and centrifugation and provides a technique through automated sample transfer through physical integration with the BD FACSLyric flow cytometer which enables subsequent automated sample acquisition. However, this technique is focused on reagent cocktailing (up to 23 reagents) and sample preparation and handing of tubes (up to 40 specimens per worklist with continuous loading) but only has the capability to process 1 sample plate (96 well) at a time. As such, this existing technique does not realize the benefit of experimental power and sample flexibility that embodiments of systems of the present disclosure do since the BD FACSLyric integrated with BD FACSDuet Premium Sample Preparation System is configured to operate on test tubes for fixed panel clinical flow cytometry testing only.

Existing techniques in the sample preparation space further include: Stratedigm Flow Cytometer Automation. Information regarding this existing technique can be found at the website produced by placing "https://" before "stratedigm.com/flow-cytometer-automation," which website is incorporated herein in its entirety. This technique enables integration of a sample plate hotel (A710), a microplate mover robotic arm (A710 HTH), a temperature-controlled incubator (A800, A810), a high throughput plate autosampler (A600 HTAS), and a bulk reagent fluid storage module (A640 CPM-4 bulk fluid containers) with a flow cytometer instrument platform. However, this existing technique does not have the experimental power that embodiments of the present disclosure offer and cannot prepare multiple sample plates with various and numerous reagents (embodiments of systems of the present disclosure can support significantly more than 23 and is not limited) and cannot handle various specimens (also not limited on embodiments of systems of the present disclosure). This existing technique does not perform the reagent cocktailing and cell sample staining that integrated liquid handlers in embodiments of systems of the present disclosure executes.

Existing techniques in the sample preparation space still further include: Cytek Orion Reagent Cocktail Preparation System. Information regarding this existing technique can be found at the website produced by placing "https://" before "cytekbio.com/pages/orion," which website is incorporated herein in its entirety. This existing technique enables researchers to automate the preparation of antibody cocktails for flow cytometry with the ability to concoct cocktails comprising of up to 60 individual antibodies. However, this existing technique is a stand-alone system replicating a mini liquid handler with reduced functionality and no ability to centrifuge and wash specimens that have been combined with the cocktails. This existing technique is not integrated with a flow cytometer.

### Additional aspects of embodiments of systems:

Embodiments of systems of the present disclosure for automated flow cytometry preparation and acquisition are configured to automate flow cytometry preparation, staining, and testing by integrating and automating antibody dilution, sample staining with antibodies, centrifugation and washing of the samples, and movement onto a flow cytometer for data acquisition. Such systems can be used to prepare multiplex samples in the fields of immunology, cell biology stem cells, and antigen discovery. Certain primary use cases for the system include, but are not limited to, the following flow cytometry processes: antibody discovery screening, determination of antibody optimal concentration, stability testing of antibodies over time, and quality testing of large-scale production antibodies.

In embodiments, systems are modular robotic system and comprise the following components that perform crucial lab bench processes: a liquid handler, such as, for example, a Hamilton Vantage for liquid handling, a plate washer and aspirator, such as, for example, a Biotek Elx405 for plate washing and aspiration, a centrifuge, such as, for example, a Hettich Rotanta for temperature controlled centrifugation of plates, a flow cytometer, such as, for example, a Bio-Rad ZES for flow cytometry acquisition, a storage device, such as, for example, a Thermo Fisher Cytomat 10c for experiment resource storage at controlled temperatures and humidities, additional storage devices, such as, for example, two plate hotels for room temperature storage of experiment resources, a barcode scanner, such as, for example, a MicroScan ESP for barcode scanning and plate tracking, and two robotic arms to coordinate movement of experiment resources between the different pieces of equipment.

As described, embodiments of systems are automated sample preparation systems. Through the implementation of automation, consistency (i.e., consistency of sample preparation) can be improved by lowering mechanistic bias and error rates, experimental power can be increased, working hours can be expanded outside of standard business hours, predictive outcomes can be utilized. Together, these benefits of embodiments of systems of the present disclosure increase throughput of flow cytometry reagent development and testing and empower scientists to reallocate time from hands-on data generation to data interpretation.

### Modularity of embodiments of systems:

Embodiment of systems are modular. Therefore, embodiments of systems are configured to operate using only a subset of the integrated pieces of equipment and in any order, which permits increased operative function and flexibility. Other embodiments of systems are configured to conduct or perform the following processes: flow cytometry sample preparation without acquisition, and automated flow cytometry acquisition of multiple, pre-prepared plates in a sequential manner.

### Underlying technical features of embodiments of systems:

In embodiments, systems are configured to modularly automate flow cytometry preparation, staining, and testing through automating antibody dilution, sample staining with antibodies, centrifugation and washing of the samples, and movement onto a flow cytometer for data acquisition. As described herein, embodiments of systems of the invention comprise off the shelf laboratory instruments or other equipment. In embodiments, instruments enabling modular laboratory processes and their technical relevancy include, but are not limited to, the following: (1) the Hamilton Vantage liquid handler supports the flow preparation of biological specimens through completion of the cell staining process. The Hamilton Vantage is programed to dilute antibody reagents to a specified concentration and transfer diluted reagent into a single cell suspension completing cellular staining. Cellular staining enables detection of antigens localized on or within a cell through specific and selective affinity. (2) The static plate hotels, the robotic arms, and plate orient enable the deployment and locomotion of samples throughout embodiments of systems. These components provide physical connectivity between all other instruments in the system. (3) The Hettich Rotanta enables temperature-controlled centrifugation of samples in embodiments of systems. Centrifugation is the process of spinning specimen in solution at high speeds to separate molecules and particles of various densities through centrifugal force. Embodiments of systems separate stained cells of interest from excess antibodies and solution debris. (4) The plates washer or washers, such as, e.g., Biotek Elx405, is used to aspirate the supernatant of the previously centrifuged samples, resuspend the sample with agitation, and dispense fresh solution onto the cells. This washing technique enables removal of waste, which facilitates cleaner data, and supplies cells with vital solution to support cell viability. (5) The Thermo Fisher Cytomat 10c facilitates temperature and humidity-controlled storage of biological specimens, solution, and reagents. Optimizing temperature and humidity storage and staining conditions supports viability of biological samples and shelf life of solutions and reagents. (6) The system barcode scanner, MicroScan ESP, supports data tracking of samples throughout the system. (7) The Qlnstruments BioShake enables unsupervised plate or tube rack shaking to facilitate automated chemistry reactions. (8a & b) The Bio-Rad ZE5 and BD FACSLyric^{™} flow cytometers acquire the stained cells. Two integrated cytometers allows for samples to be routed to either or both instruments for parallel processing and/or acquisition. Flow cytometry technology is used to characterize single suspended cells and particles in solution. As the sample is injected into the cytometer, one particle at a time, lasers intersect the particle to produce both light scattered and fluorescent signals that are converted into electricals signals via a photodiode and photomultiplier tubes and analyzed by a computer. Data from the computer is compiled into a Flow Cytometry Standard file (.fcs). Cell populations can be identified through the scatter and fluorescent characteristics. (9) In embodiments, proprietary software, referred to as Cellario, is the software used to tie together each individual physical component and software of embodiments of systems.

### Other aspects of embodiments of systems:

Embodiments of systems of the present disclosure are modular systems. As such, embodiments of systems can be expanded to automate related workflows in the fields of Cell Biology, Molecular Biology, and Immunology. Embodiments of systems can support product development for research use only (RUO) and in vitro diagnostic (IVD) and product or sample testing across R&D, preclinical, and clinical regulatory levels. Multiplex bead-based assays such as the BD^{™} Cytometric Bead Array can be automated using embodiments of systems. Staining and preparation of cells for Fluorescence-Activated Cell Sorting as well as portions of common bench protocols such as cell enrichment that do not require a sterile environment can also be automated by embodiments of systems according to the present disclosure. Integration of new equipment into embodiments of systems can extend the applications of such systems. For example, addition of a spectrophotometer and/or a thermoshaker enable embodiments of systems to automate assays such as ELISA and the Bradford Protein Assay. For example, addition of a Hamilton On-Deck Thermal Cycler extend embodiments of system's ability to automate multi-step genomic workflows.

### Exemplary workflows:

**FIG. 1A** depicts steps of an exemplary workflow for sample preparation and flow cytometric analysis performed automatically by an embodiment of a system as compared with similar steps performed manually by a laboratory technician. Flow diagram 101 depicts the workflow steps performed by an embodiment of a system, where individual workflow steps are performed automatically by robotic components manipulating one or more samples with respect to one or more sample processing modules. Flow diagram 102 shows the workflow steps performed by a laboratory technician. Both automated workflow, shown in flow diagram 101, and manual workflow, shown in flow diagram 102, are designed to prepare and flow cytometrically analyze a sample in the same way; however, in the case of automated workflow, shown in flow diagram 101, the constituent steps are performed automatically by using an embodiment of system.

**FIGS. 1B-1C** present additional examples of manual and automated workflows. Flow diagram 103 depicts a manual preparation and acquisition workflow for flow cytometric analysis of a sample. Flow diagram 103 differentiates between workflow steps that require user interaction and passive steps (i.e., workflow steps that require no direct user interactions, such as an antibody incubation step). The majority of the steps of the manual workflow depicted in flow diagram 103 require user interaction.

Flow diagram 104 depicts an automated preparation and acquisition workflow for flow cytometric analysis of a sample using an embodiment of a system of the present disclosure. Flow diagram 104 differentiates between workflow steps that require user interaction and automated steps (referred to as "Workcell" steps). The automated or Workcell, steps require no direct user interactions, such that a user can conduct the preparation and acquisition workflow automatically, in walkaway mode. The majority of the steps of the automated workflow depicted in flow diagram 104 are automated steps. The embodiment of the system employed in connection with the automated workflow depicted in flow diagram 104 comprises a sample processing module that is a Hamilton Vantage Liquid Handler 104A, which is employed in connection with two of the steps of the automated workflow depicted in flow diagram 104. The embodiment of the system employed further comprises a sample processing module that is an ELx405 Plate Washer and Rotanta Centrifuge 104B, which is employed in connection with two of the steps of the automated workflow depicted in flow diagram 104. The workflows depicted by flow diagram 103 and flow diagram 104 are designed to achieve the same sample preparation and flow cytometric analysis of the sample, except that with respect to flow diagram 104, an embodiment of a system is utilized to automate the majority of the workflow steps.

The embodiment of the system utilized in connection with automated workflow shown in flow diagram 104 is a system that integrates multiple pieces of equipment, i.e., sample processing modules and robotic components, to automate flow cytometry preparation and staining and acquisition. Such system comprises: (1) Cellario: scheduling software for the embodiment of the system; the user interacts with this software before the run starts; (2) Hamilton Vantage 104A: automated liquid handler that performs the pipetting steps during automated runs; this module is integrated into the system; (3) Hamilton Run Control: software used to define liquid handling parameters; the user interacts with this software before the run starts; (4) BioRad ZES: flow cytometer integrated into the system; (5) Everest: software used to define set-up; the user interacts with this software before the run starts (i.e., before the automated steps of workflow are initiated); (6) BioTek EIx405 104B: plate washer that is integrated into the system; a user does not typically interact with this module; (7) Hettich Rotanta: centrifuge that is integrated into the system; a user does not typically interact with this equipment; (8) Cytomat: incubator that is integrated into the system; a user may place plates into the incubator before the run starts (i.e., before initiating the automated workflow shown in flow diagram 104; and (9) Acell Arms: two robotic arms that are integrated into the system and configured to move plates around; a user does not typically interact with this equipment. In the automated workflow shown in flow diagram 104, plate washing refers to the process of removing excess antibodies from cells and can involve moving a plate to the plate washer and centrifuge multiple times. **FIG. 1D** shows exemplary microtiter plates 105 and exemplary reagent troughs 106, in each case for use by the system. Microtiter plates 105 may be employed by the system, such that robotic components of the system manipulate such plates 105 in connection with performing a workflow, e.g., moving such plates 105 between sample processing modules, such as those described herein. Reagent troughs 106 may be employed by the system, such that one or more sample processing modules utilize reagents present in reagent troughs 106. Reagent troughs may similarly be manipulated by robotic components, such that robotic components of the system manipulate such reagent troughs 106 in connection with performing a workflow, e.g., moving such troughs 106 between sample processing modules, such as those described herein.

**FIG. 1E** presents another example of an automated workflow for sample preparation and flow cytometric analysis of the prepared sample. Flow diagram 107 represents automated workflow that can be automatically performed by a system according to an embodiment of the present disclosure. That is, workflow of flow diagram 107 can be performed in walkaway format, i.e., without direct operator supervision or intervention. With respect to flow diagram 107, the letter "P" refers to plates; the letters "TR" refer to tube racks; and the letters "AB" refer to antibodies.

### Exemplary systems:

**FIGS. 1F-1K** show an exemplary system for automated sample preparation according to an embodiment. System 110 includes a plurality of sample processing modules 111A, 111B, 111C, which comprise an incubator that is a Cytomat 10, a storage unit, a chiller, a plate washer that is a Hudson Rapidwash, a well washer that is a Biotek elx405, a compressor, a vacuum pump, a static nest, a bottle, a plate rotator that is a HighRes Biosolutions Plateorient, a barcode scanner that is a HighRes Biosolutions barcode scanner, plate storage that is a HighRes Biosolutions Platehotel, a centrifuge that is a Hettich Rotanta, a handover nest that is a HighRes Biosolutions Handover Nests, an automated liquid handling platform that is a Hamilton Vantage 2M, a light curtain, a pipettor, a sample receiving area, a reagent receiving area and a waste receiving area. System 110 further includes a plurality of robotic components 112A, 112B, which comprise a Hamilton Precise ACell 512 robot on 1.5 m rail. Robotic components 112A, 112B are integrated with the sample processing modules 111A, 111B, 111C, such that the robotic components can manipulate samples, e.g., microwell plates, between sample processing modules. System 110 further includes a flow cytometer 113 that is a Biorad ZE5 Cytometer. Aspects of system 110 are mounted on one or more fixed tables and/or carts, such as table 115. System 110 further includes user interfaces 114A, 114B, comprising a display, which may be a touchscreen display, and keyboard, which may include an integrated mouse or trackpad. As described here, system 110 is configured such that a user interacts with system 110 configured a sample preparation and/or analysis workflow, by interfacing with one of user interfaces 114A, 114B, and, upon initiating system 110, i.e., instructing system 110 to begin sample preparation, further user interaction is not required, i.e., such that system 110 is configured to prepare samples for flow cytometry in walkaway format. System 110 further includes a processor and memory which may be integrated into the user interfaces as well as an operable connection among the user interfaces, sample processing modules and robotic components.

System 110 is configured to receive a three-phase AC hard-wired power connection; a compressed air connection to receive compressed air at 100-110 PSI; a CO₂ connection to receive compressed CO₂ at 10-15 PSI; and an ethernet connection. System 110 is configured to be lagged to the floor. System 110 comprises a plurality of emergency stop buttons distributed throughout the system for access by users. System 110 includes a system status light tower to easily indicate system state.

**FIGS. 1L-1M** show an exemplary system for automated sample preparation according to another embodiment. System 120 includes sample processing modules 121A, 121B, 121C, robotic components 122A, 122B that are robotic arms, flow cytometer 123, user interface 124 and table 125. Sample processing modules include a Thermo Scientific^{™} Cytomat^{™} 5 C Series Automated Incubator, a Hudson Rapidwash plate washer, a HighRes Biosolutions 4-position platehotel, a Biotek EL406 on a slide, a Biorad ZE6 Cytometer, a HighRes Biosolutions Plateorient, barcode scanner, static nest, 8-position platehotel and handover nest, a Hettich Rotanta, a Hamilton Vantage 2M model with light curtains. Robotic components include a Hamilton Precise 57 Robot and a Hamilton Precise 512 on 1.5M rail.

**FIGS. 1N-1P** show an exemplary system for automated sample preparation according to still another embodiment. System 150 includes a plurality of sample processing modules 151A, 151B, 151C, which comprise an incubator that is a Cytomat 10 C425, a storage unit, a chiller, a well washer that is a Biotek elx405 on a slide, a compressor, a vacuum pump, a static nest that is HighRes Biosolutions Static Nest, a bottle, a plate rotator that is a HighRes Biosolutions Plateorient, a barcode scanner that is a HighRes Biosolutions barcode scanner, plate storage that is a HighRes Biosolutions 8-position Platehotel and/or HighRes Biosolutions low density 6-position Platehotel, a centrifuge that is a Hettich Rotanta, a handover nest that is a HighRes Biosolutions Handover Nests, an automated liquid handling platform that is a Hamilton Vantage 2M, a pipettor, a sample receiving area, a reagent receiving area, a waste receiving area, a reagent dispenser that is a BioTek MultiFlo FX Multimode Dispenser and a thermoshaker (i.e., a heater-cooler shaker) that is a QInstruments Bioshake Q1. One or more of the sample processing modules 151A, 151B, 151C may be remotely accessed by a personal computer. System 150 further includes a plurality of robotic components 152A, 152B, which comprise a HighRes ACell 512 robot on 1.5 m rail and/or a HighRes Biosolutions ACell 57 robot with non-swappable Rotanta fingers. Robotic components 152A, 152B are integrated with the sample processing modules 151A, 151B, 151C, such that the robotic components can manipulate samples, e.g., microwell plates, between sample processing modules. System 150 further includes a flow cytometer 153A that is a BD FACSLyric and a flow cytometer 153B that is a Biorad ZE5 Cytometer. Aspects of system 150 are mounted on one or more fixed tables and/or carts, such as table 155. System 150 further includes user interfaces 154A, 154B, comprising a display, which may be a touchscreen display, and keyboard, which may include an integrated mouse or trackpad. As described herein, system 150 is configured such that a user interacts with system 150 to configure a sample preparation and/or analysis workflow by interfacing with one of user interfaces 154A, 154B, and, upon initiating system 150, i.e., instructing system 150 to begin sample preparation, further user interaction is not required, i.e., such that system 150 is configured to prepare samples for flow cytometry in walkaway format. System 150 further includes a processor and memory which may be integrated into the user interfaces as well as an operable connection among the user interfaces, sample processing modules and robotic components.

System 150 is configured to receive a three-phase AC hard-wired power connection; a compressed air connection to receive compressed air at 100-110 PSI; a CO₂ connection to receive compressed CO₂ at 10-15 PSI; and an ethernet connection. System 150 is configured to be lagged to the floor. System 150 comprises a plurality of emergency stop buttons distributed throughout the system for access by users. System 150 includes a system status light tower to easily indicate system state.

**FIG. 1Q** shows exemplary sample processing modules that may be integrated into systems of the present disclosure, such as, for example automated system 110 or automated system 120. Sample processing module 131 is a Hamilton Vantage Liquid Handler. Sample processing module 131 is a BioRad ZE5 flow cytometer. Sample processing module 133 is a BioTek ELx405 plate washer. Sample processing module 134 is a Cytomat 10 425 incubator. Sample processing module 135 is a Hettich Rotanta centrifuge. Sample processing module 136 is a Hudson Rapidwash 136. Sample processing module 137 is a Microscan MS-3 laser fixed mount barcode scanner.

### System schematic:

**FIG. 1R** shows a schematic diagram of an exemplary system according to an embodiment. System 140 comprises a plurality of sample processing modules 141, a plurality of robotic components 142. Robotic components 142 are integrated with the sample processing modules, as indicated by arrow 145, which represents that robotic components 142 are configured such that they manipulate, operate on or otherwise control, sample processing modules 141, e.g., by moving samples, e.g., in microwell plates, into and out of various sample processing modules 141. System 140 further comprises processor comprising memory 143. The memory comprises instructions stored thereon, which when executed by the processor 143, cause the processor to control the sample processing modules 141 and the robotic components 142 to: operate the sample processing modules 141 and robotic components 142 to prepare a plurality of samples for flow cytometric analysis. System 140 further comprises an operable connection among the processor 143, the sample processing modules 141 and the plurality of robotic components 142. Such operable connection comprises any convenient connection capable or conveying instructions, e.g., control instructions, from processor 143 to robotic components 142 and sample processing modules 141.

Any convenient sample processing modules 141 may be included in the system, as described herein. The number of sample processing modules may vary in embodiments and may include two, three, four, five, six, seven, eight, nine, ten, 15, 20, 25, 30, 35, 40, 45, 50 or more sample processing modules. System 140 may be configured such that different sample processing modules may be added or removed from the system. That is, the system, even after being deployed, e.g., into a laboratory environment, may be reconfigured to include additional sample processing modules or to remove certain sample processing modules, as desired. In other words, the system is configured such that multiple types of laboratory equipment configured for the same or similar function may be employed; e.g., systems of the present disclosure may be configured to operate using any convenient centrifuge, for example, or automatic pipettor, for example. The system may, in some cases, be dynamically reconfigurable. In general, sample processing modules are standard, off the shelf laboratory equipment, as described herein. As such, a dynamically reconfigurable system allows different laboratory equipment to be leveraged, e.g., on hand laboratory equipment.

In embodiments, the plurality of sample processing modules, such as sample processing modules 141, are configured to prepare samples for flow cytometric analysis. In some embodiments, the plurality of sample processing modules comprises standalone lab equipment. In certain embodiments, the plurality of modules comprises one or more of: an antibody dilution module, a cell staining module, a sample washing module, a sample resuspension module, a sample movement module and a sample analysis module. In such cases, the cell staining module may be configured for cell staining with fluorescent conjugated antibodies. As described herein, in embodiments, the plurality of modules comprises one or more of: an incubator, such as a Cytomat 10, a storage unit, a chiller, a plate washer, such as a Hudson Rapidwash, a well washer such as a Biotek elx405, a compressor, a vacuum pump, a static nest, a bottle, a flow cytometer such as a BD FACSLyric^{™} and/or a Biorad ZE5 Cytometer, a plate rotator such as a HighRes Biosolutions Plateorient, a barcode scanner such as a HighRes Biosolutions barcode scanner, a plate storage such as a HighRes Biosolutions Platehotel and/or a HighRes Biosolutions static nest, a centrifuge such as a Hettich Rotanta, a handover nest such as a HighRes Biosolutions Handover Nests, an automated liquid handling platform such as a Hamilton Vantage 2M, a pipettor, a reagent dispenser such as a BioTek MultiFlo FX Multimode Dispenser, a thermoshaker (i.e., a heater-cooler shaker) such as a QInstruments Bioshake Q1, a sample receiving area, a reagent receiving area and a waste receiving area. In some cases, the plurality of sample processing modules are configured to perform cell staining on the sample. In other cases, the plurality of sample processing modules are configured to incubate the sample. In still other cases, the plurality of sample processing modules are configured to manipulate the sample in a multi-well plate. In certain cases, the plurality of sample processing modules comprise a pipettor. In embodiments, the plurality of sample processing modules are configured to pipette fluid into or out of a multi-well plate. In other embodiments, the plurality of sample processing modules comprise a centrifuge. In some embodiments, the plurality of sample processing modules are configured to spin the sample to separate aspects of the sample. In still other embodiments, the plurality of sample processing modules are configured to wash the sample.

Any convenient robotic components 142 may be included in the system 140, as described herein. The number of robotic components may vary in embodiments and may include two, three, four, five, six, seven, eight, nine, ten, 15, 20, 25, 30, 35, 40, 45, 50 or more robotic components. System 140 may be configured such that different robotic components may be added or removed from the system. That is, the system, even after being deployed, e.g., into a laboratory environment, may be reconfigured to include additional robotic components or to remove certain robotic components, as desired. In other words, the system is configured such that multiple types of robotic components configured for the same or similar function may be employed; e.g., systems of the present disclosure may be configured to operate using any convenient robotic arm or robotic gripper mounted on different axes, for example. The system may, in some cases, be dynamically reconfigurable. In general, robotic components are standard, off the shelf laboratory equipment, as described herein. As such, a dynamically reconfigurable system allows different laboratory equipment to be leveraged, e.g., on hand laboratory equipment.

In embodiments, the robot components are configured for moving one or more multi-well plates. In some embodiments, the robotic components are configured for moving a multi-well plate into and out of a module. In other embodiments, the robotic components comprise fingers configured for gripping a multi-well plate. In still other embodiments, the robot components are configured for manipulating a module. In some cases, the robot components comprise rails and actuators for translating robot components. In other cases, the robotic components comprise robotic arms. Robotic components of interest are commercially available, off the shelf robotic arms, grippers, or the like. In some cases, robotic components include a Hamilton Precise ACell 512 robot on 1.5 m rail and/or a HighRes Biosolutions ACell 57 robot with non-swappable Rotanta fingers. Robotic components may be integrated with sample processing modules by mounting the robotic components such that they have access to the sample processing modules, e.g., such that the robotic components can load or unload samples, e.g., multi-well plates and move such sample or multi-well plates among the different sample processing modules.

As described herein, in embodiment, robotic components and sample processing modules may be configured to operate on a sample present in any convenient medium. In some cases, the modules and robotic components are configured to manipulate one or more of: test tubes, multi-well plates, deep-well plates and standard-well plates. In other cases, the modules and robotic components are configured to manipulate 96-well standard depth plates.

Processor comprising memory 143 may be any convenient processor, such as any convenient general-purpose processor or controller, such as any convenient commercially available processor or controller or the like, as such are described herein. As described, the memory comprises instructions stored thereon, which when executed by the processor, cause the processor to control the sample processing modules and the robotic components to operate the sample processing modules and robotic components to prepare a plurality of samples for flow cytometric analysis. In other cases, the memory comprises further instructions stored thereon, which when executed by the processor, cause the processor to control the sample processing modules and the robotic components to load each prepared sample of the plurality of samples into a flow cytometer and operate the flow cytometer to analyze each prepared sample of the plurality of samples. In general, the processor and memory implement software which enables the automation of the system, e.g., such that the system can automatically prepare samples in walkaway format.

In embodiments, the system is configured to automatically prepare a plurality of samples for flow cytometric analysis. In other embodiments, the system is configured to automatically and continuously prepare a plurality of samples for flow cytometric analysis. In some embodiments, the system is configured to prepare a plurality of samples for flow cytometric analysis in walkaway format. By walkaway format, it is meant that the system is fully automated to prepare samples, such that an operator of the system need not interact with the system once the system is instructed to prepare a plurality of samples; i.e., such that the operator can walk away while the system is automatically preparing samples. In certain embodiments, the system is configured to prepare a plurality of samples for flow cytometric analysis without requiring user interaction. In some cases, the system is configured to prepare a plurality of samples for flow cytometric analysis without requiring user manipulation of the sample. In other cases, the system is configured to prepare a plurality of samples for flow cytometric analysis without requiring user control of the sample processing modules. In still other cases, the system is configured to receive user instructions to prepare a plurality of samples for flow cytometric analysis. User instructions may be received through, e.g., a user interface. In such cases, the system may be configured to receive user instructions prior to preparing samples. In certain cases, the system is configured to automatically prepare a plurality of samples for flow cytometric analysis. Embodiments of the system are robotic systems for automated sample preparation and flow cytometric analysis. In embodiments, the instructions comprise one or more of: scheduling software, software for defining liquid handling parameters and software for defining system setup.

Embodiments of systems of the present disclosure may further comprise a number of additional aspects to facilitate automatic sample preparation and, in some cases, flow cytometric analysis. For example, some embodiments of systems of the invention comprise one or more substrates on which sample processing modules and/or robotic components are mounted. Some embodiments further comprise one or more tables. Some embodiments further comprise a user interface. Any convenient user interface may be employed, such as any commercially available, off the shelf display and input mechanism. In some cases, the user interface comprises one or more of: a display, a keyboard, a mouse, a trackpad, a user tag-out device, a system status light, an emergency stop button. Some embodiments further comprise an electrical interface for powering the system. Some embodiments further comprise a data interface for transmitting and/or receiving control or data signals from the system. Some embodiments further comprise a compressed air interface for providing pressurized air to the system. Some embodiments further comprise a network interface. Some embodiments further comprise one or more protective shields. Any convenient protective shield, such as commercially available, off the shelf protective shields, e.g., configured to shield an operator from harmful light or electromagnetic energy or the like. Some embodiments further comprise one or more light curtains.

As described herein aspects of the disclosure also include flow cytometers. Embodiment of systems of the present disclosure may be configured to both conduct sample preparation for flow cytometric analysis and also conduct the flow cytometric analysis. It is contemplated that any convenient flow cytometer may be employed in systems of the invention. Flow cytometers of interest include a light source configured to irradiate the particles in the flow stream at an interrogation point within a flow cell.

Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

Flow cytometers of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example, lasers in light beam generators of interest include those listed above.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference.

In addition, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject flow cytometers also include a fluorescent light detector configured to detect one or more fluorescent wavelengths of light. In other embodiments, flow cytometers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device, and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device, and the second fluorescent light detector is a photomultiplier tube (PMT). In other embodiments, the first fluorescent light detector is a CMOS-type device, and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, flow cytometers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255; the disclosures of which are incorporated herein by reference. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766; the disclosures of which are herein incorporated by reference in their entirety.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851; the disclosures of which are herein incorporated by reference. In some embodiments where the flow cytometer is a particle sorter, the particle sorter is an image enabled particle sorter. Image enabled particle sorters are described in U.S. Patent Nos. 10,324,019; 10,620,111; 11,105,728; and 11,774,343; as well as U.S. Patent Application Nos. 18/537,103; 18/657,618; 18,657,623 and 18/657,633; the disclosures of which are herein incorporated by reference in their entirety.

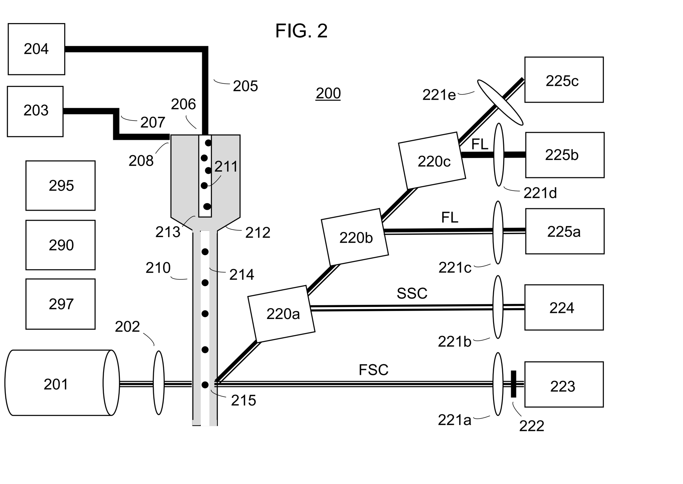

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general-purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017, the disclosure of which is incorporated herein by reference. In certain embodiments, particles (e.g., cells) of the sample are sorted using a sort decision module having a plurality of sort decision units, such as those described in U.S. Patent Publication No. 2020/0256781, filed on December 23, 2019, the disclosure of which is incorporated herein by reference. In some embodiments, systems for sorting components of a sample include a particle sorting module having deflection plates, such as described in U.S. Patent Publication No. 2017/0299493, filed on March 28, 2017, the disclosure of which is incorporated herein by reference.

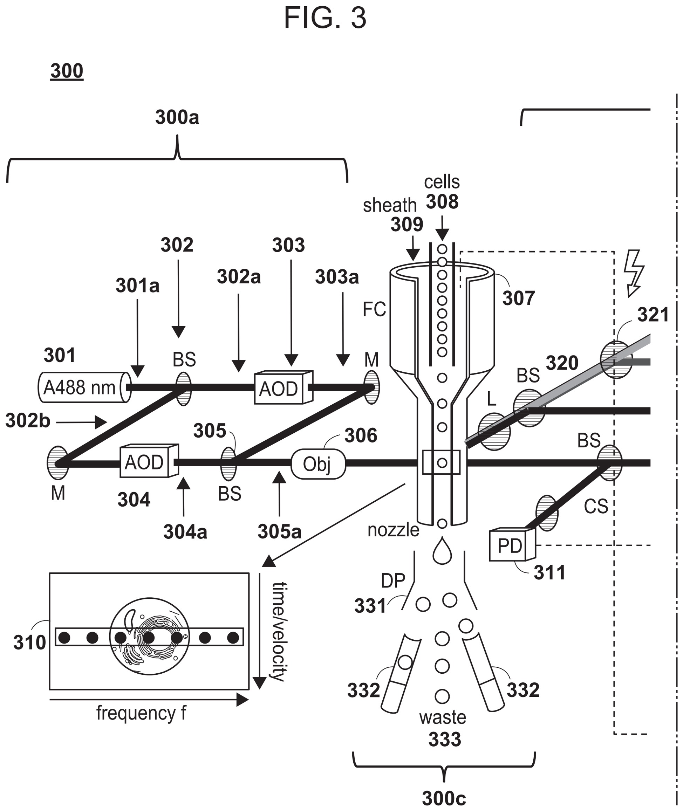

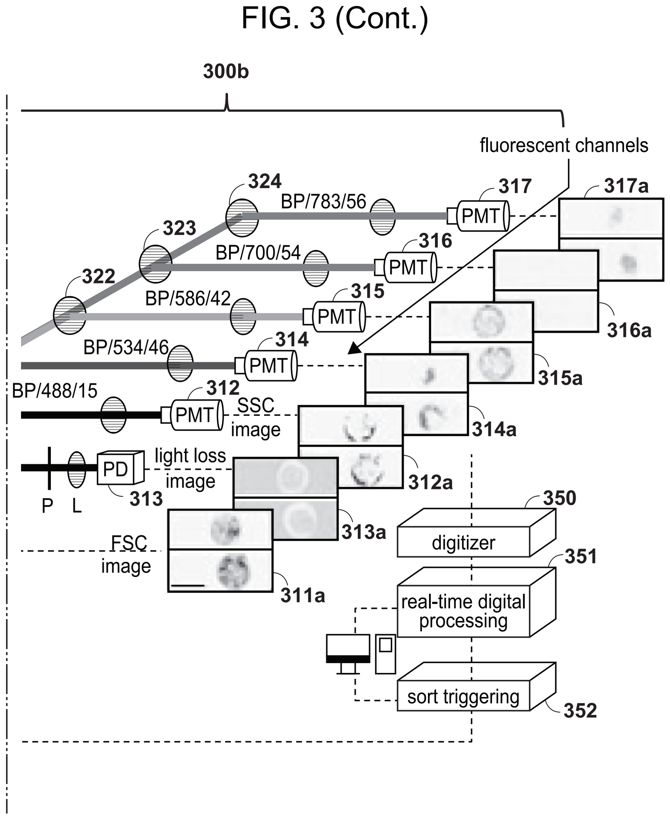

In certain embodiments, systems are a fluorescence imaging using radiofrequency tagged emission image-enabled particle sorter, such as depicted in **FIG. 3****.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943, the disclosure of which is herein incorporated by reference.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017, the disclosure of which is incorporated herein by reference. In certain embodiments, sorting component 300c includes a sort decision module having a plurality of sort decision units, such as those described in U.S. Patent Publication No. 2020/0256781, the disclosure of which is incorporated herein by reference.

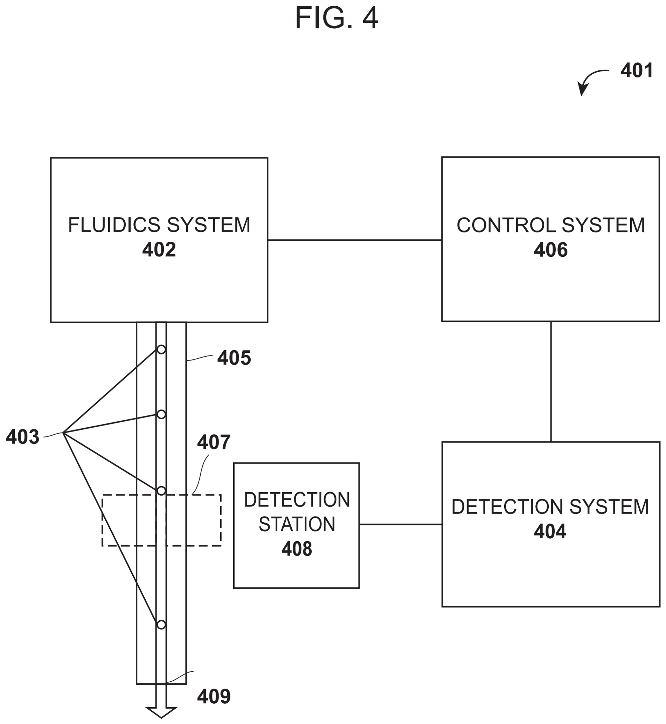

In some embodiments, systems are particle analyzers where the particle analysis system 401 **(****FIG. 4****)** can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

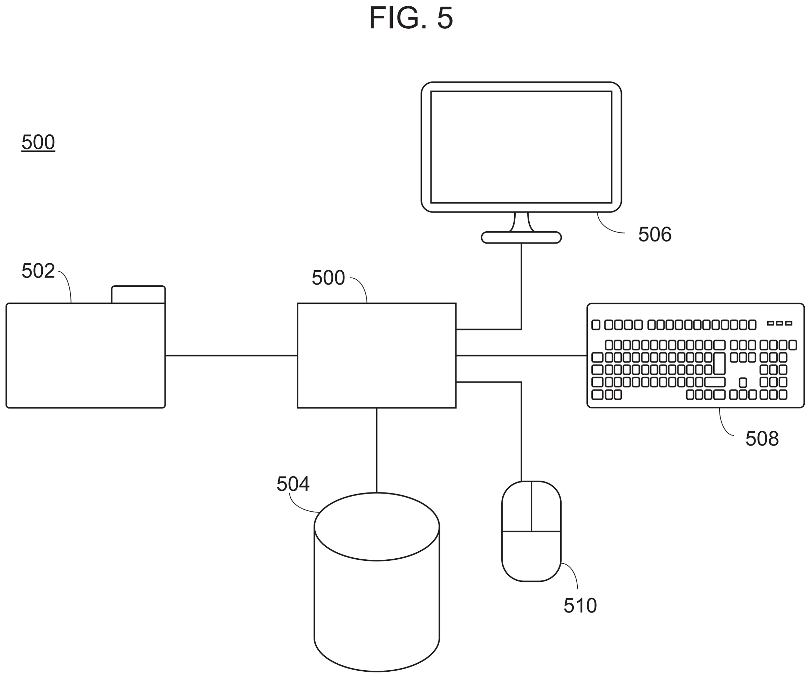

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown **in** **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

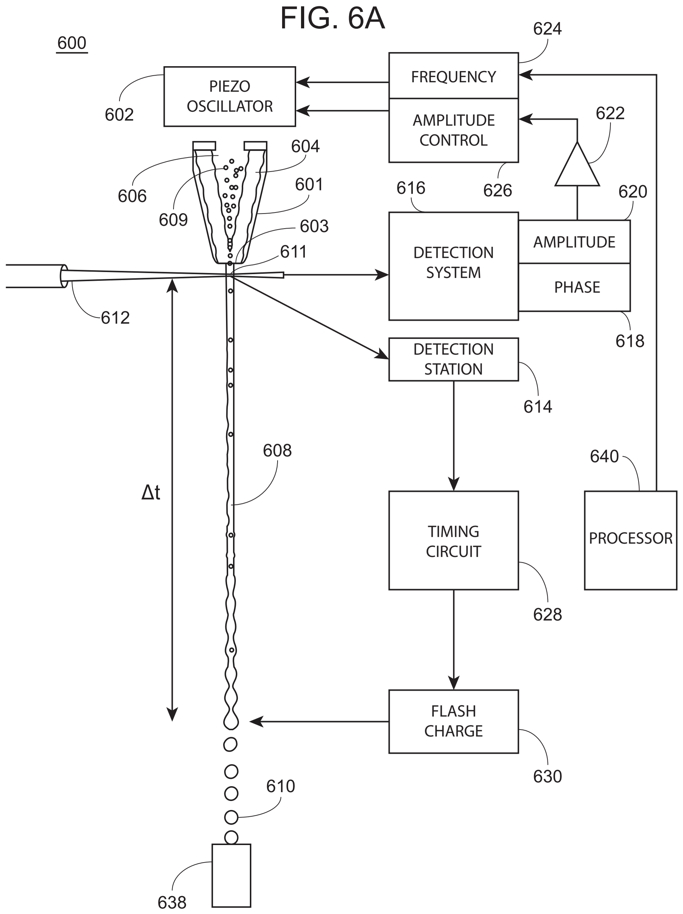

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039, which is incorporated herein by reference in its entirety. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

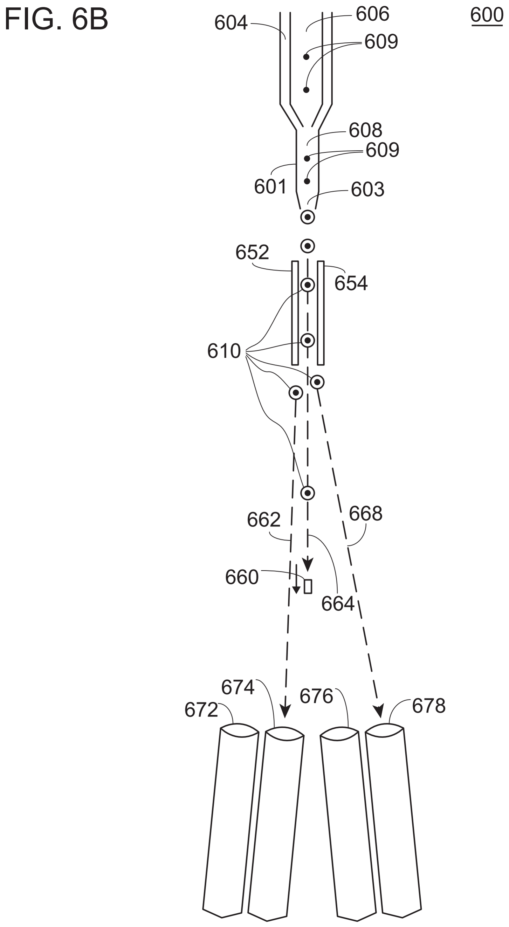

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in **FIG.** 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

### METHODS

Aspects of the disclosure also include methods for preparing samples for flow cytometric analysis. Aspects of the disclosure also include methods for preparing samples and flow cytometrically analyzing samples. Methods according to certain embodiments include introducing a plurality of samples into a first sample processing module of a plurality of sample processing modules of a system, wherein the system comprises: the plurality of sample processing modules; a plurality of robotic components integrated with the sample processing modules; a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis; and an operable connection among the processor, the sample processing modules and the plurality of robotic components; providing sample preparation instructions to the system; and activating the system to automatically prepare samples according to the sample preparation instructions.

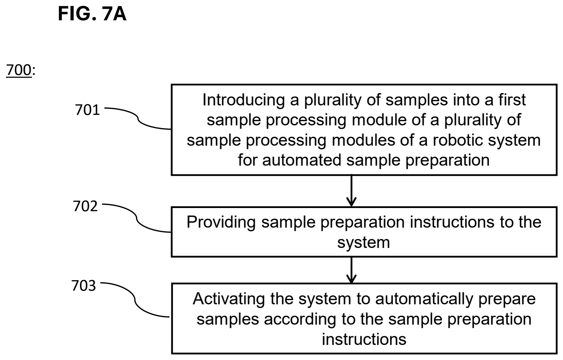

**FIG. 7A** depicts a flow diagram of a method according to an embodiment. Flow diagram 700 corresponds to a method of preparing samples for flow cytometric analysis. Flow diagram 700 begins at step 701 at which step a plurality of samples are introduced into a first sample processing module of a plurality of sample processing modules of a system according to an embodiment. Such system comprises: the plurality of sample processing modules; a plurality of robotic components integrated with the sample processing modules; a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis; and an operable connection among the processor, the sample processing modules and the plurality of robotic components. After step 701 is completed, flow diagram 700 proceeds to step 702. At step 702 of flow diagram 700, sample preparation instructions are provided to the system. After step 702 is completed, flow diagram 700 proceeds to step 703. At step 703 of flow diagram 700, the system is activated to automatically prepare samples according to the sample preparation instructions. After step 703 is completed, flow diagram 700 ends.

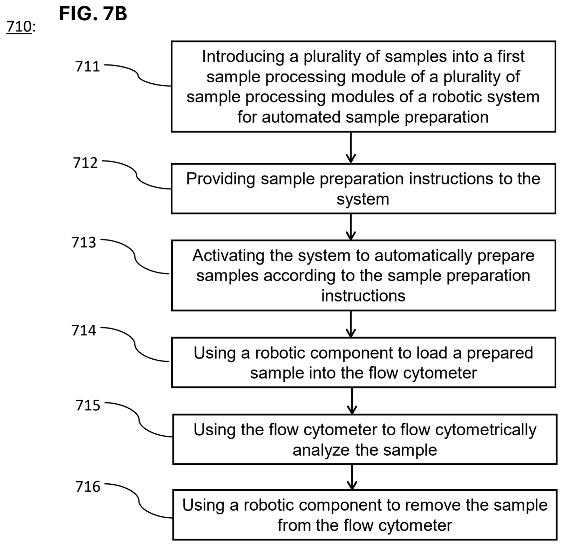

**FIG. 7B** depicts a flow diagram of a method according to another embodiment. Flow diagram 710 corresponds to a method of preparing samples for flow cytometric analysis and further conducting flow cytometric analysis of the prepared samples. Flow diagram 710 is employed in connection with an embodiment of a system of the present disclosure that further comprises a flow cytometer. Flow diagram 710 begins at step 711. Steps 711, 712 and 713 are identical to steps 701, 702, 703, respectively, of flow diagram 700. After step 713 is completed, flow diagram 710 proceeds to step 714. At step 714 of flow diagram 710, a robotic component is used to load a prepared sample into the flow cytometer. After step 714 is completed, flow diagram 710 proceeds to step 715. At step 715 of flow diagram 710, the flow cytometer is used to flow cytometrically analyze the sample. After step 715 is completed, flow diagram 710 proceeds to step 716. At step 716 of flow diagram 710, a robotic component is used to remove the sample from the flow cytometer. After step 716 is completed, flow diagram 710 ends.

Methods according to certain embodiments include computer-implemented method of preparing samples for flow cytometric analysis. Such methods include receiving a plurality of samples into a first sample processing module of a plurality of sample processing modules of a system, wherein the system comprises: the plurality of sample processing modules; a plurality of robotic components integrated with the sample processing modules; a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis; and an operable connection among the processor, the sample processing modules and the plurality of robotic components; and controlling the robotic components to manipulate the plurality of samples using the sample processing modules to prepare the plurality of samples according to the instructions stored on the memory.

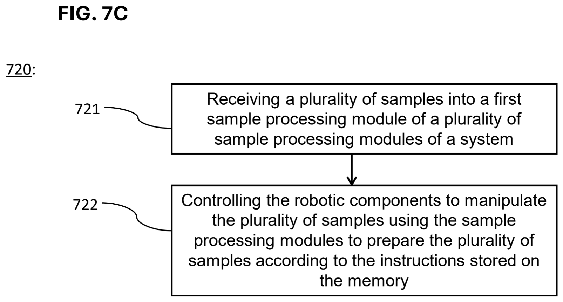

**FIG. 7C** depicts a flow diagram of a method according to another embodiment. Flow diagram 720 corresponds to a computer-implemented method of preparing samples for flow cytometric analysis. Flow diagram 720 begins at step 721 at which step a plurality of samples are introduced into a first sample processing module of a plurality of sample processing modules of a system according to an embodiment. Such system comprises: the plurality of sample processing modules; a plurality of robotic components integrated with the sample processing modules; a processor comprising memory operably coupled to the processor wherein the memory comprises instructions stored thereon, which when executed by the processor, cause the processor to control the sample processing modules and the robotic components to: operate the sample processing modules and robotic components to prepare a plurality of samples for flow cytometric analysis; and an operable connection among the processor, the sample processing modules and the plurality of robotic components. After step 721 is completed, flow diagram 720 proceeds to step 722. At step 722 of flow diagram 720, the robotic components are controlled to manipulate the plurality of samples using the sample processing modules to prepare the plurality of samples according to the instructions stored on the memory. After step 722 is completed, flow diagram 720 ends.

In embodiments, the method is a method of continuously preparing samples. In other embodiments, the method is a method of preparing samples in walkaway format. In some embodiments, the method is a method of preparing a plurality of samples for flow cytometric analysis without requiring user interaction. In certain embodiments, the method is a method of preparing a plurality of samples for flow cytometric analysis without requiring user manipulation of the sample. In some cases, the method is a method of preparing a plurality of samples for flow cytometric analysis without requiring user control of the sample processing modules. In other cases, the method further comprises receiving instructions from a user. In such cases the system may be configured to receive user instructions to prepare a plurality of samples for flow cytometric analysis. In certain cases, the first sample processing module comprises a sample receiving module. In certain cases, the sample receiving module comprises a sample storage module.

In embodiments, the sample preparation instructions comprise instructions for instructing a robotic component to move a micro-well plate from a first position to a second position. In other embodiments, the sample preparation instructions comprise instructions for instructing a robotic component to move a micro-well plate from the first sample processing module to a second sample processing module. In some embodiments, the sample preparation instructions comprise instructions for one or more of: moving one or more system components, moving one or more plates, diluting and/or preparing one or more antibody solutions, lysing a sample, combining an antibody solution and a sample, incubate a sample, resuspend a sample, wash a sample and store a sample. Embodiments of methods of the present disclosure further comprise: using a robotic component to retrieve a sample from a sample input station.

In connection with embodiments of methods of the present disclosure, the system further comprises a flow cytometer. In certain embodiments, the sample preparation instructions further comprise instructions for: using a robotic component to load a prepare sample into the flow cytometer; using the flow cytometer to flow cytometrically analyze the sample; and using a robotic component to remove the sample from the flow cytometer. In still other embodiments of methods of the present disclosure, the method is a method of using the robotic components and sample processing modules to automatically perform a manual laboratory workflow.

In some instances, the sample prepared and/or analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two-dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation-based methods, filter-based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### COMPUTER-CONTROLLED SYSTEMS

Aspects of the present disclosure further include computer-controlled systems for practicing the subject methods, where the systems further include one or more computers for complete automation or partial automation of a system for practicing methods described herein. In some embodiments, systems include a computer having a computer readable storage medium with a computer program stored thereon, where the computer program when loaded on the computer includes instructions for automatically preparing a sample for flow cytometric analysis and, in some cases, automatically conducting flow cytometric analysis of a sample prepared according to embodiments of methods of the present disclosure.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touchscreen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located, or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

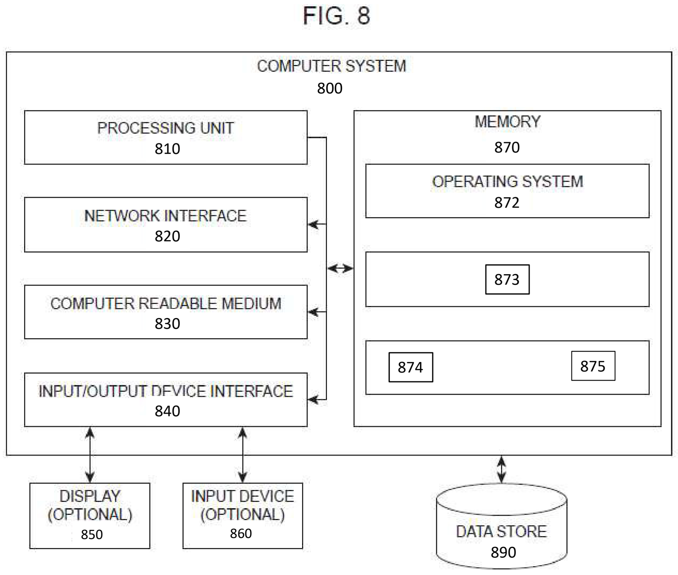

**FIG.** 8 depicts a general architecture of an example computing device 700 according to certain embodiments. The general architecture of the computing device 800 depicted in **FIG.** 8 includes an arrangement of computer hardware and software components. It is not necessary, however, that all of these generally conventional elements be shown in order to provide an enabling disclosure. As illustrated, the computing device 800 includes a processing unit 810, a network interface 820, a computer readable medium drive 830, an input/output device interface 840, a display 850, and an input device 860, all of which may communicate with one another by way of a communication bus. The network interface 820 may provide connectivity to one or more networks or computing systems. The processing unit 810 may thus receive information and instructions from other computing systems or services via a network. The processing unit 810 may also communicate to and from memory 870 and further provide output information for an optional display 850 via the input/output device interface 840. For example, an analysis software (e.g., data analysis software or program such as FlowJo^{®}) stored as executable instructions in the non-transitory memory of the analysis system can display the flow cytometry event data to a user. The input/output device interface 840 may also accept input from the optional input device 860, such as a keyboard, mouse, digital pen, microphone, touch screen, gesture recognition system, voice recognition system, gamepad, accelerometer, gyroscope, or other input device.

The memory 870 may contain computer program instructions (grouped as modules or components in some embodiments) that the processing unit 810 executes in order to implement one or more embodiments. The memory 870 generally includes RAM, ROM and/or other persistent, auxiliary or non-transitory computer-readable media. The memory 870 may store an operating system 872 that provides computer program instructions for use by the processing unit 810 in the general administration and operation of the computing device 800. Data may be stored in data storage device 890. The memory 870 may further include computer program instructions and other information for implementing aspects of the present disclosure, such as module for operate the sample processing modules and robotic components to prepare a plurality of samples for flow cytometric analysis 873 or module for receiving sample preparation instructions to the system 874 or module for controlling the robotic components to manipulate the plurality of samples using the sample processing modules to prepare the plurality of samples according to the instructions stored on the memory 875.

### KITS

Aspects of the present disclosure further include kits, where kits include one or more of the programming for the subject systems, such as in the form of a computer readable medium (e.g., flash drive, USB storage, compact disk, DVD, Blu-ray disk, etc.) or instructions for downloading the programming from an internet web protocol or cloud server or the non-transitory computer readable recording media described herein.

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

Embodiments of the disclosure find use in applications where samples, e.g., biological samples, e.g., cells, require preparation, e.g., staining, prior to flow cytometric analysis. Embodiments further find use in the context of applications where a large number of samples require such preparation and benefit automating such sample preparation steps, in terms of efficiency gains enabled when a user is not required to perform sample preparation steps as well as in terms of improved consistency across prepared samples.

Embodiments of the disclosure find use in a variety of applications where it is desirable to analyze and sort particle components in a sample in a fluid medium, such as a biological sample. In some embodiments, the systems and methods described herein find use in flow cytometry characterization of biological samples labelled with fluorescent tags. Embodiments of the present disclosure find use where it is desirable to provide a flow cytometer with improved cell sorting accuracy and enhanced particle collection.

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

Notwithstanding the appended claims, the disclosure is also defined by the following clauses:
1. A robotic system for automated sample preparation, the system comprising:
   a plurality of sample processing modules;
   a plurality of robotic components integrated with the sample processing modules;
   a processor comprising memory operably coupled to the processor wherein the memory comprises instructions stored thereon, which when executed by the processor, cause the processor to control the sample processing modules and the robotic components to:
      operate the sample processing modules and robotic components to prepare a plurality of samples for flow cytometric analysis; and
   an operable connection among the processor, the sample processing modules and the plurality of robotic components.
2. The system of clause 1, further comprising:
   a flow cytometer,
   wherein the plurality of robotic components are further integrated with the flow cytometer,
   wherein the memory further comprises instructions stored thereon, which when executed by the processor, cause the processor to control the sample processing modules, the robotic components and the flow cytometer to:
      load each prepared sample of the plurality of samples into the flow cytometer; and
      operate the flow cytometer to analyze each prepared sample of the plurality of samples,
   wherein the operable connection operably connects the processor, the sample processing modules, the flow cytometer and the plurality of robotic components.
3. The system according to any of the preceding clauses, wherein the system is configured to automatically prepare a plurality of samples for flow cytometric analysis.
4. The system according to any of the preceding clauses, wherein the system is configured to automatically and continuously prepare a plurality of samples for flow cytometric analysis.
5. The system according to any of the preceding clauses, wherein the system is configured to prepare a plurality of samples for flow cytometric analysis in walkaway format.
6. The system according to any of the preceding clauses, wherein the system is configured to prepare a plurality of samples for flow cytometric analysis without requiring user interaction.
7. The system according to any of the preceding clauses, wherein the system is configured to prepare a plurality of samples for flow cytometric analysis without requiring user manipulation of the sample.
8. The system according to any of the preceding clauses, wherein the system is configured to prepare a plurality of samples for flow cytometric analysis without requiring user control of the sample processing modules.
9. The system according to any of the preceding clauses, wherein the system is configured to receive user instructions to prepare a plurality of samples for flow cytometric analysis.
10. The system according to clause 9, wherein the system is configured to receive user instructions prior to preparing samples.
11. The system according to any of the preceding clauses, wherein the system is configured to automatically prepare a plurality of samples for flow cytometric analysis.
12. The system according to any of the preceding clauses, wherein the system is a robotic system for automated sample preparation and flow cytometric analysis.
13. The system according to any of the preceding clauses, wherein the instructions comprise one or more of: scheduling software, software for defining liquid handling parameters and software for defining system setup.
14. The system according to any of the preceding clauses, wherein the plurality of sample processing modules are configured to prepare samples for flow cytometric analysis.
15. The system according to any of the preceding clauses, wherein the plurality of sample processing modules comprises standalone lab equipment.
16. The system according to any of the preceding clauses, wherein the plurality of modules comprises one or more of: an antibody dilution module, a cell staining module, a sample washing module, a sample resuspension module, a sample movement module and a sample analysis module.
17. The system according to clause 16, wherein the cell staining module is configured for cell staining with fluorescent conjugated antibodies.
18. The system according to any of the preceding clauses, wherein the plurality of modules comprises one or more of: an incubator, a storage unit, a chiller, a plate washer, a well washer, a compressor, a vacuum pump, a static nest, a bottle, a flow cytometer, a plate rotator, a barcode scanner, plate storage, a centrifuge, a handover nest, an automated liquid handling platform, a pipettor, a sample receiving area, a reagent receiving area and a waste receiving area.
19. The system according to any of the preceding clauses, wherein the plurality of modules comprises a flow cytometer configured to perform flow cytometric analysis on a sample prepared by the system.
20. The system according to any of the preceding clauses, wherein the plurality of sample processing modules are configured to perform cell staining on the sample.
21. The system according to any of the preceding clauses, wherein the plurality of sample processing modules are configured to incubate the sample.
22. The system according to any of the preceding clauses, wherein the plurality of sample processing modules are configured to manipulate the sample in a multi-well plate.
23. The system according to any of the preceding clauses, wherein the plurality of sample processing modules comprise a pipettor.
24. The system according to any of the preceding clauses, wherein the plurality of sample processing modules are configured to pipette fluid into or out of a multi-well plate.
25. The system according to any of the preceding clauses, wherein the plurality of sample processing modules comprise a centrifuge.
26. The system according to any of the preceding clauses, wherein the plurality of sample processing modules are configured to spin the sample to separate aspects of the sample.
27. The system according to any of the preceding clauses, wherein the plurality of sample processing modules are configured to wash the sample.
28. The system according to any of the preceding clauses, wherein the robotic components are configured for moving one or more multi-well plates.
29. The system according to any of the preceding clauses, wherein the robotic components are configured for moving a multi-well plate into and out of a module.
30. The system according to any of the preceding clauses, wherein the robotic components comprise fingers configured for gripping a multi-well plate.
31. The system according to any of the preceding clauses, wherein the robotic components are configured for manipulating a module.
32. The system according to any of the preceding clauses, wherein the robotic components comprise rails and actuators for translating robot components.
33. The system according to any of the preceding clauses, wherein the robotic components comprise robotic arms.
34. The system according to any of the preceding clauses, wherein the modules and robotic components are configured to manipulate one or more of: test tubes, multi-well plates, deep-well plates and standard-well plates.
35. The system according to any of the preceding clauses, wherein the modules and robotic components are configured to manipulate 96-well standard depth plates.
36. The system according to any of the preceding clauses, further comprising one or more tables.
37. The system according to any of the preceding clauses, further comprising a user interface.
38. The system according to clause 37, wherein the user interface comprises one or more of: a display, a keyboard, a mouse, a trackpad, a user tag-out device, a system status light, an emergency stop button.
39. The system according to any of the preceding clauses, further comprising an electrical interface for powering the system.
40. The system according to any of the preceding clauses, further comprising an electrical interface for powering the system.
41. The system according to any of the preceding clauses, further comprising a data interface for transmitting and/or receiving control or data signals from the system.
42. The system according to any of the preceding clauses, further comprising a gas interface for providing pressurized gas to the system.
43. The system according to any of the preceding clauses, further comprising a network interface.
44. The system according to any of the preceding clauses, further comprising one or more protective shields.
45. The system according to any of the preceding clauses, further comprising one or more light curtains.
46. A method of preparing samples for flow cytometric analysis, the method comprising:
   introducing a plurality of samples into a first sample processing module of a plurality of sample processing modules of a system, wherein the system comprises:
      the plurality of sample processing modules;
      a plurality of robotic components integrated with the sample processing modules;
      a processor comprising memory operably coupled to the processor
   wherein the memory comprises instructions stored thereon, which when executed by the processor, cause the processor to control the sample processing modules and the robotic components to:
      operate the sample processing modules and robotic components to prepare a plurality of samples for flow cytometric analysis; and
      an operable connection among the processor, the sample processing modules and the plurality of robotic components;
   providing sample preparation instructions to the system; and
   activating the system to automatically prepare samples according to the sample preparation instructions.
47. A computer-implemented method of preparing samples for flow cytometric analysis, the method comprising:
   receiving a plurality of samples into a first sample processing module of a plurality of sample processing modules of a system, wherein the system comprises:
      the plurality of sample processing modules;
      a plurality of robotic components integrated with the sample processing modules;
      a processor comprising memory operably coupled to the processor
   wherein the memory comprises instructions stored thereon, which when executed by the processor, cause the processor to control the sample processing modules and the robotic components to:
      operate the sample processing modules and robotic components to prepare a plurality of samples for flow cytometric analysis; and
      an operable connection among the processor, the sample processing modules and the plurality of robotic components; and
   controlling the robotic components to manipulate the plurality of samples using the sample processing modules to prepare the plurality of samples according to the instructions stored on the memory.
48. The method according to any of clauses 46 to 47, wherein the method is a method of continuously preparing samples.
49. The method according to any of clauses 46 to 48, wherein the method is a method of preparing samples in walkaway format.
50. The method according to any of clauses 46 to 49, wherein the method is a method of preparing a plurality of samples for flow cytometric analysis without requiring user interaction.
51. The method according to any of clauses 46 to 50, wherein the method is a method of preparing a plurality of samples for flow cytometric analysis without requiring user manipulation of the sample.
52. The method according to any of clauses 46 to 51, wherein the method is a method of preparing a plurality of samples for flow cytometric analysis without requiring user control of the sample processing modules.
53. The method according to any of clauses 46 to 52, wherein the method further comprises receiving instructions from a user.
54. The method according to any of clauses 46 to 53, wherein the system is configured to receive user instructions to prepare a plurality of samples for flow cytometric analysis.
55. The method according to any of clauses 46 to 54, wherein the first sample processing module comprises a sample receiving module.
56. The method according to any of clauses 46 to 55, wherein the sample receiving module comprises a sample storage module.
57. The method according to any of clauses 46 to 56, wherein the sample preparation instructions comprise instructions for instructing a robotic component to move a micro-well plate from a first position to a second position.
58. The method according to any of clauses 46 to 57, wherein the sample preparation instructions comprise instructions for instructing a robotic component to move a micro-well plate from the first sample processing module to a second sample processing module.
59. The method according to any of clauses 46 to 58, wherein the sample preparation instructions comprise instructions for one or more of: moving one or more system components, moving one or more plates, diluting and/or preparing one or more antibody solutions, lysing a sample, combining an antibody solution and a sample, incubate a sample, resuspend a sample, wash a sample and store a sample.
60. The method according to any of clauses 46 to 59, further comprising:
   using a robotic component to retrieve a sample from a sample input station.
61. The method according to any of clauses 46 to 60, wherein the system further comprises a flow cytometer.
62. The method according to any of clauses 46 to 61, wherein the sample preparation instructions further comprise instructions for:
   using a robotic component to load a prepared sample into the flow cytometer;
   using the flow cytometer to flow cytometrically analyze the sample; and
   using a robotic component to remove the sample from the flow cytometer.
63. The method according to any of clauses 46 to 62, wherein the method is a method of using the robotic components and sample processing modules to automatically perform a manual laboratory workflow.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the spirit or scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope and spirit of present disclosure is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A robotic system for automated sample preparation, the system comprising:
a plurality of sample processing modules;
a plurality of robotic components integrated with the sample processing modules;
a processor comprising memory operably coupled to the processor wherein the memory comprises instructions stored thereon, which when executed by the processor, cause the processor to control the sample processing modules and the robotic components to:
operate the sample processing modules and robotic components to prepare a plurality of samples for flow cytometric analysis; and
an operable connection among the processor, the sample processing modules and the plurality of robotic components.

2. The system of claim 1, further comprising:
a flow cytometer,
wherein the plurality of robotic components are further integrated with the flow cytometer,
wherein the memory further comprises instructions stored thereon, which when executed by the processor, cause the processor to control the sample processing modules, the robotic components and the flow cytometer to:
load each prepared sample of the plurality of samples into the flow cytometer; and
operate the flow cytometer to analyze each prepared sample of the plurality of samples,
wherein the operable connection operably connects the processor, the sample processing modules, the flow cytometer and the plurality of robotic components.

3. The system according to any of the preceding claims, wherein the system is configured to automatically prepare a plurality of samples for flow cytometric analysis.

4. The system according to any of the preceding claims, wherein the system is configured to automatically and continuously prepare a plurality of samples for flow cytometric analysis.

5. The system according to any of the preceding claims, wherein the system is configured to prepare a plurality of samples for flow cytometric analysis in a walkaway format.

6. The system according to any of the preceding claims, wherein the system is a robotic system for automated sample preparation and flow cytometric analysis.

7. The system according to any of the preceding claims, wherein the instructions comprise one or more of: scheduling software, software for defining liquid handling parameters and software for defining system setup.

8. The system according to any of the preceding claims, wherein the plurality of sample processing modules are configured to prepare samples for flow cytometric analysis.

9. The system according to any of the preceding claims, wherein the plurality of sample processing modules comprises standalone lab equipment.

10. The system according to any of the preceding claims, wherein the plurality of modules comprises one or more of: an antibody dilution module, a cell staining module, a sample washing module, a sample resuspension module, a sample movement module and a sample analysis module.

11. The system according to any of the preceding claims, wherein the plurality of modules comprises one or more of: an incubator, a storage unit, a chiller, a plate washer, a well washer, a compressor, a vacuum pump, a static nest, a bottle, a flow cytometer, a plate rotator, a barcode scanner, plate storage, a centrifuge, a handover nest, an automated liquid handling platform, a pipettor, a sample receiving area, a reagent receiving area and a waste receiving area.

12. The system according to any of the preceding claims, wherein the plurality of modules comprises a flow cytometer configured to perform flow cytometric analysis on a sample prepared by the system.

13. The system according to any of the preceding claims, further comprising a user interface.

14. The system according to any of the preceding claims, further comprising a network interface.

15. A method of preparing samples for flow cytometric analysis, the method comprising:
introducing a plurality of samples into a first sample processing module of a plurality of sample processing modules of a system, wherein the system comprises:
the plurality of sample processing modules;
a plurality of robotic components integrated with the sample processing modules;
a processor comprising memory operably coupled to the processor
wherein the memory comprises instructions stored thereon, which when executed by the processor, cause the processor to control the sample processing modules and the robotic components to:
operate the sample processing modules and robotic components to prepare a plurality of samples for flow cytometric analysis; and
an operable connection among the processor, the sample processing modules and the plurality of robotic components;
providing sample preparation instructions to the system; and
activating the system to automatically prepare samples according to the sample preparation instructions.
